# EUROPEAN PATENT SPECIFICATION

(11) **EP 1 319 275 B1**
(45) Date of publication and mention of the grant of the patent: **29.12.2010**
(21) Application number: 01961571.5
(22) Date of filing: 30.08.2001
(51) Int. Cl.: H04B 7/02

(54) **A METHOD AND APPARATUS FOR DIRECTING DOWNLINK TRANSMISSIONS TO THE CORRECT MOBILE STATION IN A TELECOMMUNICATIONS SYSTEM USING ADAPTIVE ANTENNAS**
VERFAHREN UND GERÄT ZUR AUSRICHTUNG EINER ABWÄRTS-ÜBERTRAGUNG AN DIE RICHTIGE MOBILSTATION IN EINEM TELEKOMMUNIKATIONSSYSTEM MIT ADAPTIVEN ANTENNEN
PROCEDE ET APPAREIL FACILITANT L'ORIENTATION D'UNE TRANSMISSION DESCENDANTE VERS LA JUSTE STATION MOBILE DANS UN SYSTEME DE TELECOMMUNICATIONS UTILISANT LES ANTENNES ADAPTIVES

(30) Priority: 18.09.2000 SE 0003351
(43) Date of publication of application: 18.06.2003
(73) Proprietor: Telefonaktiebolaget LM Ericsson (publ), 164 83 Stockholm (SE)
(72) Inventor: DAM, Henrik, DK-1427 Köpenhamn K (DK); BERG, Magnus, S-112 29 Stockholm (SE)
(74) Representative: Kühn, Friedrich Heinrich
(86) International application number: PCT/SE2001/001870
(87) International publication number: WO 2002/023767

(56) References cited:
- WO-A-99/02005
- WO-A-99/41918
- WO-A-99/52181
- SINHA R ET AL: "Forward link capacity in smart antenna base stations with dynamic slot allocation" NINTH IEEE INTERNATIONAL SYMPOSIUM ON PERSONAL, INDOOR AND MOBILE RADIO COMMUNICATIONS (CAT. NO.98TH8361), PROCEEDINGS OF NINTH INTERNATIONAL SYMPOSIUM ON PERSONAL, INDOOR, AND MOBILE RADIO COMMUNICATIONS (PIMRC'98), BOSTON, MA, USA, 8-11 SEPT. 1998, pages 942-946 vol.2, XP002169051 1998, New York, NY, USA, IEEE, USA ISBN: 0-7803-4872-9

## Description

### TECHNICAL FIELD OF THE INVENTION

The present invention relates generally to methods for using adaptive antennas in cellular mobile telephone systems, and more particularly the invention relates to a method for enabling the use of adaptive antennas in packet data systems.

The invention also relates to an arrangement for carrying out the method.

### BACKGROUND OF THE INVENTION

It is anticipated that a large part of the future growth of wireless communication will be data traffic. Due to the "burstiness" of data traffic, the spectrum is more effectively used if the users share a common radio resource. An efficient way of sharing a radio resource is to use packet data. Thus, a great effort has been made in standardising a protocol for transmitting packet data in GSM (Global System for Mobile Communication) networks. This protocol is called GPRS (General Packet Radio Service) with future enhancements in EGPRS (Edge GPRS). EGPRS is also the preferred migration path of DAMPS (Digital Advanced Mobile Phone System).

The GPRS/EGPRS protocol enables more than one mobile station to use the same timeslot or timeslots. This is done by time multiplexing users on the same radio resource. When starting a transmission the mobile station is assigned one or more timeslots in up- and downlink. In the assignment the mobile stations are given a temporal bit flow identity (TFI) and an uplink state flag (USF). The TFI is attached to data blocks in order to identify the terminating mobile station of the transmitted data block. In downlink all mobiles are listening to the assigned timeslots and try to decode all data blocks but only considers the blocks with corresponding TFI's.

The preferred method for scheduling the uplink is to use the USF, which is attached to user data in downlink data blocks. A mobile station is assigned its USF when given a radio resource and is allowed to transmit an uplink data block on a following timeslot if it detects its USF in the corresponding downlink data block. This method is called dynamic assignment. Another method for scheduling the uplink is to use an entire downlink data block, i.e. when -a mobile station is signalling uplink channel request, the reply from the network is a bitmap telling the mobile station what timeslots in what TDMA-frames the mobile station should use. The bitmap is transmitted to the mobile station in a dedicated data block. This method is called fixed assignment. All scheduling of packet data is performed by a scheduler, called Packet Control Unit (PCU) in GPRS/EGPRS. The scheduler can be located in e.g. a mobile services switching centre, a base station controller or a base transceiver station.

Adaptive antennas, here defined to be an antenna system that is able to change its characteristics to changes in the network, have several interesting properties. One of the most important features of an adaptive antenna system is that the base station is able to detect the direction to the transmitting mobile station and that it has the means to transmit information in an antenna beam directed towards a specific mobile station. An antenna beam is defined as any signal transmission deliberately covering only a part of a cell, the cell defined as the total coverage area of a base station. This implies that the downlink signal is not transmitted in the entire cell, resulting in lower interference in the system.

Adaptive antennas have been shown to increase the system downlink C/I as much as 6dB compared to a regular system using sector-antennas. Because the interference level is reduced a channel reuse pattern can be formed in which channels are reused more frequently, and thus the capacity of the network can be increased. If the reuse pattern is left unchanged the C/I of the communication links is increased. Thus, the reduced downlink interference can be used either for increasing the number of users in the system or for increasing the C/I of the communication links.

The increased C/I of the communication links can in its turn be used to produce a significant throughput increase in a system carrying GPRS/EGPRS traffic. This is mainly due to link adaptation, which transforms communication link improvements into a throughput increase. In EGPRS two modulation methods, providing nine different coding and modulation schemes, are used to ensure maximum throughput at the current communication link quality, C/I. The payload per transmitted data block varies with the quality of the communication link. A communication link having high quality can be used for a higher data transmission rate either by applying higher modulation or by using less error correcting coding. Thus, it is obvious that there is a large potential in applying adaptive antennas in systems carrying GPRS/EGPRS traffic.

However, a problem exists with associating received uplink data with the originating mobile station. In general, uplink data is used for estimating the shape and/or direction of the downlink transmission with respect to the desired mobile station. This implies that an adaptive antenna using adaptation in downlink needs to keep track of all mobile stations in transmission state, i.e. mobile stations having a radio resource and data to transmit. The problem is that the base station doesn't know what uplink data blocks correspond to what downlink blocks since this information is located in the scheduler. This problem is not encountered in circuit switched traffic where down- and uplink timeslots are always related in the same way. Further, this problem is not encountered when using sector antennas since sector antennas doesn't adapt to different mobile stations.

More specifically the problem arises when an adaptive antenna system is used in the base station and two spatially separated mobile stations are allocated the same radio resource. The base station then needs to know when the different mobile stations are transmitting packet data blocks in order to be able to steer the downlink transmission to the correct mobile station. This scheduling information is not known in the base transceiver station since the scheduler, i.e. the PCU in GPRS/EGPRS, controls all scheduling.

In the Swedish patent specification SE 509 776, a method for linking information between logical channels autonomously in a base station, is described. The solution is to add a database in the base station storing subscriber information. A key-field or a subscriber identity is used to retrieve and update the right information. To access the right information in the database, received data is decoded and the identity of the transmitting mobile is controlled. The information in the database is preferably used when there is a need for changing traffic channels, e.g. during hand over.

The solution according to SE 509 776 has the disadvantage of having to decode the received data to be able to access the correct part of the database.

There is thus a need to provide an efficient method of finding the identity of uplink packet data blocks and to associate downlink transmissions to the correct mobile station when using adaptive antennas.

### SUMMARY OF THE INVENTION

The present invention provides a solution to the problem concerning how to associate uplink packet data to the originating mobile station in order to be able to direct downlink transmissions to the correct mobile station when using adaptive antennas.

One object of the present invention is to provide a flexible and efficient adaptive antenna solution for packet data systems.

Another object of the present invention is to reduce the amount of delay and overhead signalling for associating uplink packet data to the originating mobile station.

The above mentioned objects are basically achieved by having the scheduler signalling the uplink and downlink scheduling information to, depending on the chosen strategy, the beam selection algorithm or the direction of arrival (DOA) estimation algorithm and the beam switch or the beam forming algorithm, and by specifying a beam selection algorithm or DOA-estimation algorithm for every mobile station instead of for every timeslot. The received information, i.e. the direction to the transmitting mobile, soft values etc., is stored in a part of a physical context memory, specific for each mobile station.

In a first embodiment of the invention the beam selection algorithm or DOA-estimation algorithm contains a time filtering function, i.e. information from uplink transmissions in present and past is used to calculate the best beam. This implies that the beam selection algorithm or the DOA-estimation algorithm needs information from the physical context memory when calculating a new best beam.

In a second embodiment of the invention the information of the beam in which the mobile station is located is used for optimising the resource allocation and the scheduling. This implies that information of the selected beam from the beam selection- or DOA-estimation algorithm must be signalled to the scheduler.

In a third embodiment of the invention, frames not received entirely correct is used together with retransmitted frames, i.e. soft values of received data are combined to generate a good estimate of the received data. This is called incremental redundancy and requires that scheduling information from the scheduler is signalled to the base transceiver station so that data originating from the same mobile stations is added.

The embodiments of the invention can preferably be implemented by software code segments, and e.g. be stored in any of the relevant nodes of a mobile communication system, such as a base station, a base station controller, a mobile services switching centre, a packet control unit etc.

By adopting the proposed solution it is possible to use adaptive antennas in packet data systems, carrying e.g. GPRS/EGPRS traffic. The combination of the link adaptation of GPRS/EGPRS and the carrier to interference gain introduced by adaptive antennas produces a pronounced increase in system performance.

Although the invention has been summarised above, the method and arrangement according to the appended independent claims 1, 7 and 9 define the scope of the invention. Various embodiments are further defined in the dependent claims 2-6, 8 and 10-13.

### BRIEF DESCRIPTION OF THE DRAWINGS

These and other objects and advantages of the invention will become more fully apparent from the following detailed description when read in conjunction with the accompanying drawings with like reference numerals indicating corresponding parts, and wherein:
- Figure 1: illustrates the problem of associating uplink packet data blocks with the originating mobile station when the mobile stations are spatially separated;
- Figure 2: shows an antenna diagram with fixed directional beams and a sector antenna;
- Figure 3: shows the RLC/MAC-block structure of GPRS;
- Figure 4A: shows the signalling link between the PCU located in a BSC and the BTS;
- Figure 4B: shows the signalling link between the PCU located in a BTS and TRXs
- Figure 5: illustrates linking of uplink information to the correct part of a physical context memory; and
- Figure 6: illustrates linking of downlink information from the physical context memory to a beam switch.

### DETAILED DESCRIPTION

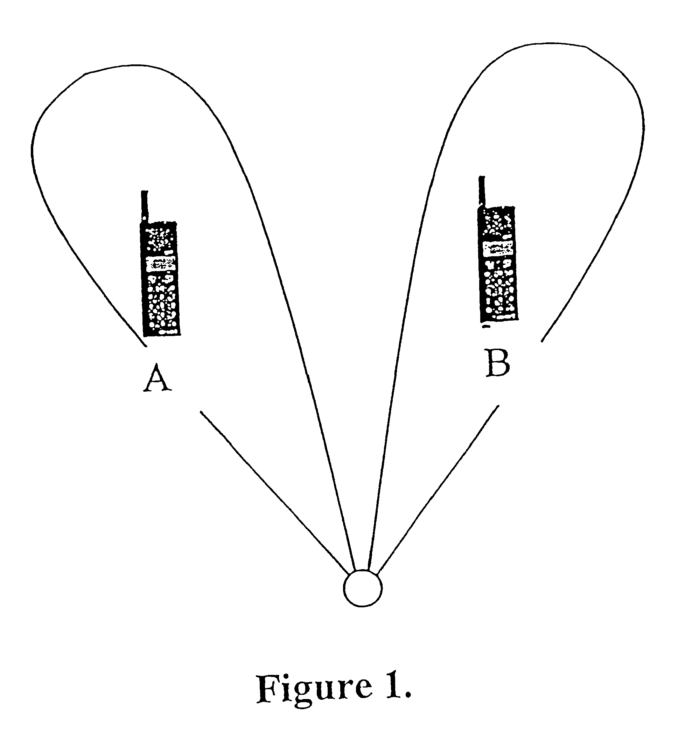

The present invention describes a method and a system for associating uplink packet data with the correct transmitting mobile station when the mobile stations, A and B, are spatially separated and allocated the same radio resource as shown in figure 1. The base station needs to know when different mobile stations are transmitting and receiving packet data blocks in order to be able to steer the downlink transmission to the correct mobile station. This information is not known in the base station since all scheduling of packets takes place in a scheduler.

In adaptive antenna solutions aimed at increasing system capacity, the conventional sector antennas are replaced by one or several antenna arrays. The basic principle is, instead of transmitting information in the entire sector, to direct narrow antenna beams from the base station towards a desired mobile station. Downlink transmission strategies may be grouped within two main classes: either when a beam can be steered directly towards the desired mobile station or when a beam is selected from a set of beams with fixed directions. The beam suitable for downlink transmission is selected or steered on information derived from the uplink, the direction of arrival (DOA) of the received uplink data. The DOA can be an estimate of the direction to the mobile station or simply an identification of the best uplink beam.

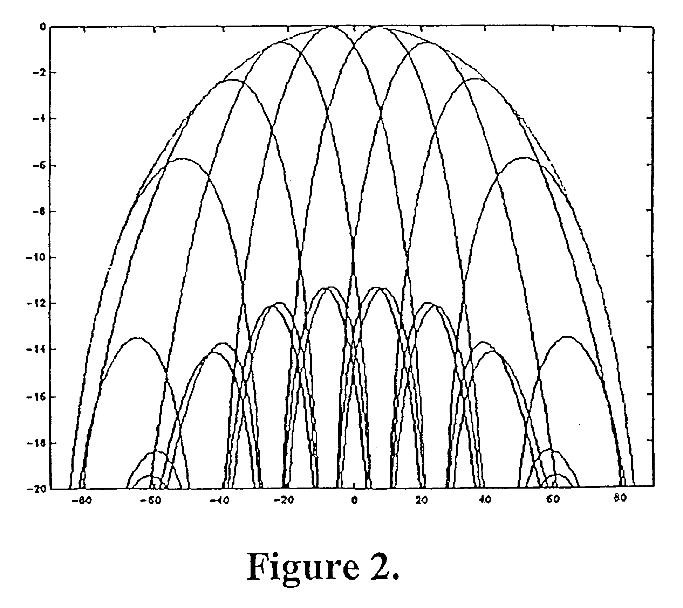

In the following the invention will be described using a GPRS/EGPRS packet data system, employing an adaptive antenna system with fixed beams. Eight interleaved beams and a sector antenna cover the cell, see figure 2. The selection of the best beam is performed by a beam selection algorithm, which typically measures the uplink radio quality in the different beams. The beam with the best uplink radio quality is used as an estimate on where the originating mobile station is located and is also used for downlink transmissions. In the downlink a beam switch is used to transmit the downlink packets in the correct beam. It should be noted that the switched fixed beam system is an illustrative example, which is easily, extended to e.g. a steered beam antenna system. This is evident if the beam selection algorithm is exchanged by a direction of arrival (DOA) estimation algorithm and the downlink beam switch is exchanged by means for performing digital beam forming.

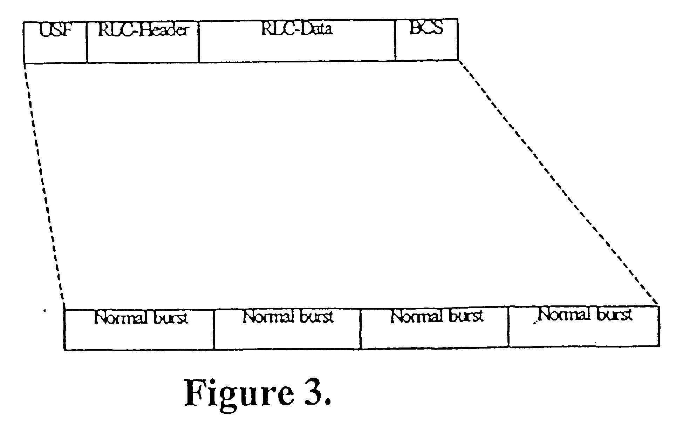

The above problem with associating uplink packet data to the originating mobile station is according to the invention basically solved by signalling from the scheduler to the beam selection algorithm and the beam switch the uplink and downlink scheduling information respectively and by using the scheduling information for storing information relating to beam selection or DOA estimation in a physical context memory. In GPRS/EGPRS the scheduling unit is called packet control unit (PCU). The solution will be further described with reference to figures 3-6.

Figure 3 shows in detail the radio block structure of the smallest re-transmittable entity in GPRS/EGPRS, the Radio Link Control (RLC)/ Medium Access Control (MAC)-block. Each RLC/MAC-block consists of a MAC header, an RLC data block and a block check sequence (BCS). The MAC header comprises an uplink state flag (USF) and the RLC data block consists of an RLC header, containing a block type indicator and power reduction fields, and RLC data. The RLC header also contains a mobile station identity indicator. The RLC/MAC-block is channel coded, interleaved and mapped onto four normal GSM bursts. A mobile station thus has to receive all four bursts to receive the RLC/MAC-block. The scheduling information is found in the USF, which gives the corresponding mobile station permission to transmit on the uplink. The scheduling of these RLC/MAC-blocks is as mentioned before taken care of by the PCU, which can control up to 500 base stations. The PCU can e.g. be located in the base station controller (BSC) or in the base transceiver station (BTS). If the solution according to the invention is not used, the originating mobile station is identified by decoding the RLC/MAC-block and use the mobile station indicator in the RLC-header.

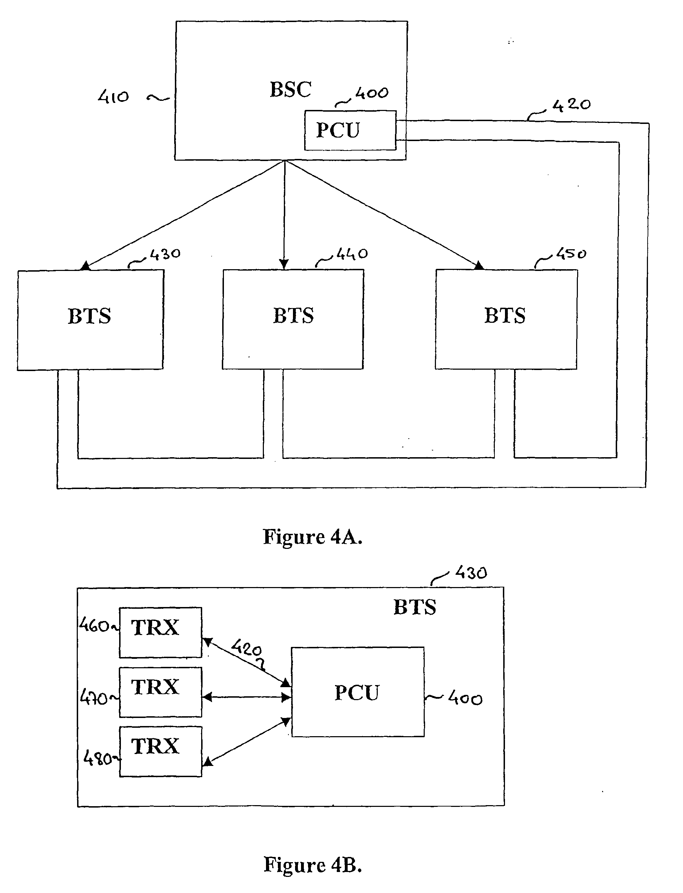

If the PCU 400 is located in the BSC 410 a signalling link 420 has to be established between the PCU 400 in the BSC 410 and the BTS 430-450, see figure 4a. If, on the other hand, the PCU 400 is located in the BTS 430, figure 4b, a signalling link 420 between the PCU 400 in the BTS 430 and preferably a channel coding unit (CCU) in the transceivers 460-480 has to be established. This makes it possible to have one PCU 400 controlling the scheduling of data packets for several transceivers 460-480.

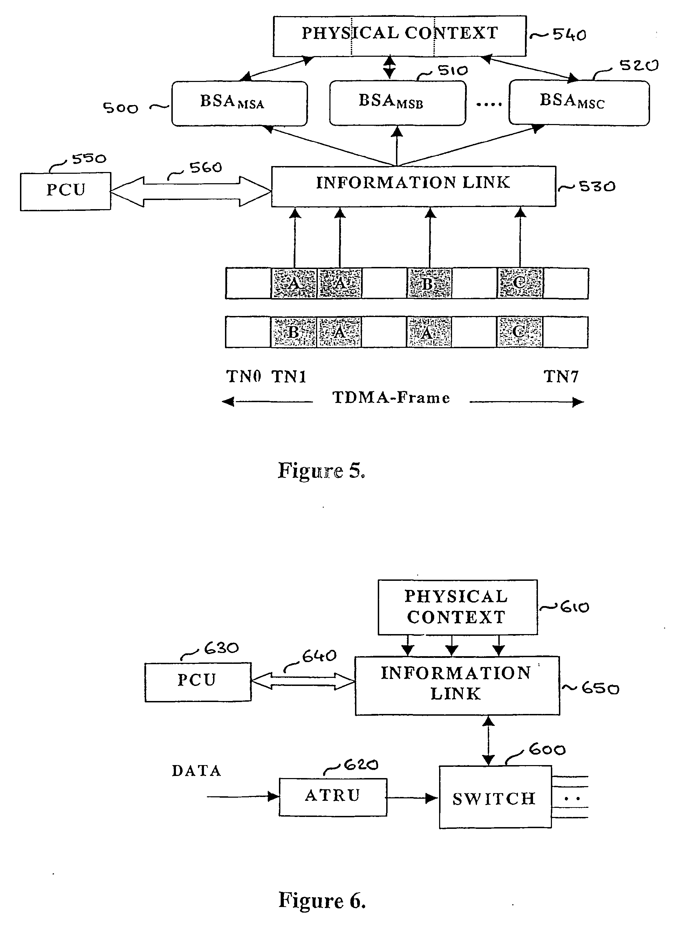

Now referring to figure 5 the association of uplink packet data to its originating mobile station is illustrated. In GPRS/EGPRS a beam selection algorithm cannot be implemented for every timeslot, since several mobile stations can be multiplexed on the same timeslot or timeslots. The beam selection algorithm 500-520 thus has to be implemented for every mobile station so that the received data can be linked 530 to the correct part of a physical context memory 540. This is an operation, which the base transceiver station cannot perform without information available from the PCU 550, since the originating mobile station of the uplink data packets is simply not known in the base transceiver station. Hence, information about the uplink scheduling in the PCU 550 is signalled over a signalling link 560 to the base transceiver station, which then can link 530 the received data to the correct part of the physical context memory 540 for later retrieval. The physical context memory 540 stores information for every mobile in Transfer State, and contains values used for beam selection or DOA estimation, e.g. samples of signal strength and signal quality. The physical context memory 540 could also contain historical information of previous transmissions in order to allow time filtering.

In figure 6 is the situation in the downlink shown. For downlink transmissions the beam switch 600 needs to get information from the physical context memory 610 containing which beam to transmit the downlink data in, since the base transceiver station doesn't know the destination of the downlink data packets. Data is transmitted by an adaptive transceiver unit (ATRU) 620 to the beam switch 600. The physical context memory 610 thus has to be informed by the PCU 630 over a signalling link 640 of the identity of the downlink terminating mobile so that information from the correct part of the physical context memory can be linked 650 to the beam switch 600.

In a first embodiment of the invention the beam selection algorithm contains a time filtering function, i.e. information from uplink transmissions in the past and present is used to calculate the best beam. This implies that the beam selection algorithm needs information from the physical context memory when calculating a new beam and thus downlink scheduling information has to be transmitted from the PCU to the physical context memory to access the correct part of the physical context memory.

In a second embodiment of the invention the information of the beam in which the mobile station is located is used for optimising the resource allocation and scheduling. Thus, information about the selected beam is signalled from the transceiver to the PCU. This information can e.g. be used for beam packing and optimised scheduling.

In a third embodiment of the invention user data received by a mobile station but not decoded correctly is still used to some extent by using incremental redundancy, i.e. the soft values of a first received frame is used together with the soft values of a retransmitted frame. The retransmitted frame may have been coded in a different way, which further increases the information, and thus more data can be correctly decoded. To perform incremental redundancy, scheduling information is required in the base transceiver station to be able to combine information from transmissions originating from the same mobile station.

It is obvious that the described invention may be varied in many ways.

## Claims

1. A method for enabling the use of adaptive antennas in a packet data system comprising at least one base station (430, 440, 450) transmitting packet data to a plurality of mobile stations within its respective area of coverage,
the method being **characterised by**
signalling uplink and downlink scheduling information from a scheduler (400, 550, 630) to a link optimising unit located in the at least one base station (430, 440, 450);
providing data derived from received uplink data packets and storing said data in a part of a physical context memory (540; 610) specific for each mobile station, according to said uplink scheduling information;
said data derived from received uplink data packets concerning a direction of a transmitting mobile station; and
optimising down link transmission by downlink transmission to a correct mobile station, based on the content of the physical context memory (540; 610) and said downlink scheduling information.

2. The method of claim 1 further **characterised by** further optimizing of downlink transmissions by time filtering data derived from previous uplink transmissions stored in the physical context memory (540; 610) when calculating a best beam for downlink transmission.

3. The method of claim 1 further **characterised by** further optimising downlink transmission by time filtering data derived from previous uplink data transmissions stored in the physical context memory (540; 610) when forming a beam for downlink transmission.

4. The method of any of claims 1-3 further **characterised in that** the position of mobile stations is signalled to a scheduler (400, 550, 630) for optimizing scheduling.

5. The method of claim 4 **characterised in that** said optimizing is done by multiplexing mobile stations covered by the same or neighbouring antenna beams on the same packet data channel.

6. The method of any of claims 1-5 further **characterised by** said data derived from received uplink data packets further comprising soft values and by using incremental redundancy when decoding uplink or downlink transmissions.

7. A computer program product comprising a computer readable medium, having thereon:
computer program code segments for performing the method of any of claims 1-6 when said product is run on a computer.

8. The computer program product according to claim 7 **characterised in that** it is stored in a node of a mobile communication system.

9. A base station for enabling the use of adaptive antennas in a packet data system with a plurality of mobile stations within the coverage area of the base station (430, 440, 450),
the base station (430, 440, 450) being **characterised by** comprising
a scheduler (400, 550, 630) for signalling uplink and downlink scheduling information to a link optimising unit located in the base station (430, 440, 450);
means for providing data derived from received uplink data packets to be stored in a part of a physical context memory (540; 610) specific for each mobile station, according to said uplink scheduling information;
said data derived from received uplink data packets concerning a direction of a transmitting mobile station; and
means for optimising downlink transmission by downlink transmission to a correct mobile station, based on the content of the physical context memory (540; 610) and said downlink scheduling information.

10. The base station of claim 9 further **characterised in that** said means for optimising further comprises means for time filtering data derived from previous uplink transmissions stored in the physical context memory (540; 610) when calculating a best beam for downlink transmission.

11. The base station of claim 9 further **characterised in that** said means for optimising further comprises means for time filtering data derived from previous uplink data transmissions stored in the physical context memory (540; 610) when forming a beam for downlink transmission.

12. The base station of any of claims 9-11 **characterised by** said data derived from received uplink data packets further comprising soft values and by means for decoding uplink transmissions by incremental redundancy.

13. The base station in any of claims 9-12 **characterised by** means for multiplexing mobile stations covered by the same or neighbouring antenna beam of an adaptive antenna on the same packet data channel.

## Patentansprüche

1. Verfahren, um die Verwendung von adaptiven Antennen in einem Paketdatensystem zu ermöglichen, das mindestens eine Basisstation (430, 440, 450) umfasst, die Paketdaten an eine Vielzahl von Mobilstationen innerhalb ihres jeweiligen Versorgungsgebiets überträgt,
wobei das Verfahren **gekennzeichnet ist durch**
Signalisieren von Uplink- und Downlink-Schedulinginformation von einem Scheduler (400, 550, 630) an eine Linkoptimierungseinheit, die in der mindestens einen Basisstation (430, 440, 450) angeordnet ist;
Bereitstellen von Daten, die von den empfangenen Uplink-Datenpaketen abgeleitet sind, und Speichern der Daten in einem Teil eines physikalischen Kontextspeichers (540; 610), der für jede Mobilstation spezifisch ist, gemäß der Uplink-Schedulinginformation;
die von den empfangenen Uplink-Datenpaketen abgeleiteten Daten eine Richtung der übertragenden Mobilstation betreffen; und
Optimieren einer Downlink-Übertragung **durch** lenken der Downlink-Übertragung an eine geeignete Mobilstation, die auf den Inhalt des physikalischen Kontextspeichers (540; 610) und der Uplink-Schedulinginformation basiert.

2. Verfahren nach Anspruch 1, ferner **gekennzeichnet durch** weitere Optimierung von Downlink-Übertragungen **durch** Zeitfilterung von Daten, die aus im physikalischen Kontextspeicher (540; 610) gespeicherten vorherigen Uplink-Übertragungen abgeleitet sind, wenn ein bester Beam für Downlink-Übertragung berechnet wird.

3. Verfahren nach Anspruch 1, ferner **gekennzeichnet durch** weitere Optimierung von Downlink-Übertragungen **durch** Zeitfilterung von Daten, die aus im physikalischen Kontextspeicher (540; 610) gespeicherten vorherigen Uplink-Übertragungen abgeleitet sind, wenn ein Beam für Downlink-Übertragung geformt wird.

4. Verfahren nach einem der Ansprüche 1-3, ferner **dadurch gekennzeichnet, dass** die Position von Mobilstationen zum Optimieren des Scheduling an einen Scheduler (400, 550, 630) signalisiert wird.

5. Verfahren nach Anspruch 4, **dadurch gekennzeichnet, dass** das Optimieren durch Multiplexen von Mobilstationen ausgeführt wird, die von denselben oder benachbarten Antennen-Beams auf demselben Paketdatenkanal erfasst werden.

6. Verfahren nach einem der Ansprüche 1-5, ferner **gekennzeichnet durch** fernere Weich-Werte enthaltende Daten, die von den empfangenen Uplink-Datenpaketen abgeleitet sind, und **durch** Verwenden von inkrementaler Redundanz, wenn Uplink- oder Downlink-Übertragungen decodiert werden.

7. Computerprogrammprodukt, ein computerlesbares Medium umfassend, auf dem bereitstehen:
Computerprogramm-Codesegmente zum Ausführen des Verfahrens nach einem der Ansprüche 1-6, wenn das Produkt auf einem Computer abläuft.

8. Computerprogrammprodukt nach Anspruch 7, **dadurch gekennzeichnet, dass** es in einem Knoten eines Mobilkommunikationssystems gespeichert ist.

9. Basisstation, um die Verwendung von adaptiven Antennen in einem Paketdatensystem mit einer Vielzahl von Mobilstationen innerhalb des Versorgungsgebiets der Basisstation (430, 440, 450) zu ermöglichen,
wobei die Basisstation (430, 440, 450) **dadurch gekennzeichnet ist, dass** sie Folgendes umfasst:
einen Scheduler (400, 550, 630) zum Signalisieren von Uplink- und Downlink-Schedulinginformation an eine Linkoptimierungseinheit, die in der Basisstation (430, 440, 450) angeordnet ist;
Mittel zum Bereitstellen von Daten, die von den empfangenen Uplink-Datenpaketen abgeleitet sind, um in einem Teil eines physikalischen Kontextspeichers (540; 610) gespeichert zu werden, der für jede Mobilstation spezifisch ist, gemäß der Uplink-Schedulinginformation;
die von den empfangenen Uplink-Datenpaketen abgeleiteten Daten eine Richtung der übertragenden Mobilstation betreffen; und
Mittel zum Optimieren einer Downlink-Übertragung durch lenken der Downlink-Übertragung an eine geeignete Mobilstation, die auf den Inhalt des physikalischen Kontextspeichers (540; 610) und der Downlink -Schedulinginformation basiert.

10. Basisstation nach Anspruch 9, ferner **dadurch gekennzeichnet, dass** das Mittel zum Optimieren ferner ein Mittel zur Zeitfilterung von Daten umfasst, die aus im physikalischen Kontextspeicher (540; 610) gespeicherten vorherigen Uplink-Übertragungen abgeleitet sind, wenn ein bester Beam für Downlink-Übertragung berechnet wird.

11. Basisstation nach Anspruch 9, ferner **dadurch gekennzeichnet, dass** das Mittel zum Optimieren ferner ein Mittel zur Zeitfilterung von Daten umfasst, die aus im physikalischen Kontextspeicher (540; 610) gespeicherten vorherigen Uplink-Übertragungen abgeleitet sind, wenn ein Beam für Downlink-Übertragung geformt wird.

12. Basisstation nach einem der Ansprüche 9-11, **gekennzeichnet durch** Weich-Werte enthaltende Daten, die von empfangenen Uplink-Datenpaketen abgeleitet sind, und **durch** ein Mittel zum Decodieren von Uplink-Übertragungen **durch** inkrementale Redundanz.

13. Basisstation nach einem der Ansprüche 9-12, **gekennzeichnet durch** ein Mittel zum Multiplexen von Mobilstationen, die **durch** denselben oder einen benachbarten Antennen-Beam einer adaptiven Antenne auf demselben Paketdatenkanal erfasst werden.

## Revendications

1. Procédé destiné à permettre l'utilisation d'antennes adaptatives dans un système de données en paquets comprenant au moins une station de base (430, 440, 450) transmettant des données en paquets à une pluralité de stations mobiles au sein de sa zone de couverture respective
le procédé étant **caractérisé en ce qu'**il comporte les étapes ci-dessous consistant à:
signaler des informations de planification en liaison montante et en liaison descendante provenant d'un planificateur (400, 550, 630) à une unité d'optimisation de liaison localisée dans la au moins une station de base (430, 440, 450);
fournir des données dérivées des paquets de données reçus en liaison montante et stocker lesdites données dans une partie d'une mémoire contextuelle physique (540, 610) spécifique à chaque station mobile, selon lesdites informations de planification en liaison montante;
lesdites données dérivées des paquets de données reçus en liaison montante concernant une direction d'une station mobile transmettante; et
optimiser une transmission en liaison descendante en dirigeant la transmission en liaison descendante vers une station mobile appropriée sur la base du contenu de la mémoire contextuelle physique (540, 610) et lesdites informations de planification en liaison descendante.

2. Procédé selon la revendication 1, **caractérisé en outre par** l'optimisation ultérieure des transmissions en liaison descendante en filtrant chronologiquement des données dérivées de précédentes transmissions en liaison montante stockées dans la mémoire contextuelle physique (540, 610) lors du calcul d'un meilleur faisceau pour la transmission en liaison descendante.

3. Procédé selon la revendication 1, **caractérisé en outre par** l'optimisation ultérieure des transmissions en liaison descendante en filtrant chronologiquement des données dérivées de précédentes transmissions en liaison montante stockées dans la mémoire contextuelle physique (540, 610) lors de la formation d'un faisceau pour la transmission en liaison descendante.

4. Procédé selon l'une quelconque des revendications 1 à 3, **caractérisé en outre en ce que** la position des stations mobiles est signalée à un planificateur (400, 550, 630) en vue d'optimiser la planification.

5. Procédé selon la revendication 4, **caractérisé en ce que** ladite optimisation est réalisée en multiplexant des stations mobiles couvertes par les mêmes faisceaux d'antennes ou des faisceaux d'antennes voisins sur le même canal de données en paquets.

6. Procédé selon l'une quelconque des revendications 1 à 5, **caractérisé en outre par le fait que** lesdites données dérivées des paquets de données reçus en liaison montante comprennent en outre des valeurs souples et par l'utilisation d'une redondance incrémentielle lors du décodage des transmissions en liaison descendante ou en liaison montante.

7. Produit-programme informatique comprenant un support lisible par un ordinateur, présentant:
des segments de code de programme informatique pour mettre en oeuvre le procédé selon l'une quelconque des revendications 1 à 6 lorsque ledit produit-programme est exécuté sur un ordinateur.

8. Produit-programme informatique selon la revendication 7, **caractérisé en ce qu'**il est stocké dans un noeud d'un système de communication mobile.

9. Station de base destinée à permettre l'utilisation d'antennes adaptatives dans un système de données en paquets avec une pluralité de stations mobiles dans la zone de couverture de la station de base (430, 440, 450),
la station de base (430, 440, 450) étant **caractérisée en ce qu'**elle comporte:
un planificateur (400, 550, 630) pour signaler des informations de planification en liaison montante et en liaison descendante à une unité d'optimisation de liaison localisée dans la station de base (430, 440, 450);
un moyen pour fournir des données dérivées des paquets de données reçus en liaison montante à stocker dans une partie d'une mémoire contextuelle physique (540, 610) spécifique à chaque station mobile, selon lesdites informations de planification à liaison montante;
lesdites données dérivées des paquets de données reçus en liaison montante concernant une direction d'une station mobile de transmission; et
un moyen pour optimiser une transmission en liaison descendante en dirigeant la transmission en liaison descendante vers une station mobile appropriée sur la base du contenu de la mémoire contextuelle physique (540, 610) et desdites informations de planification à liaison descendante.

10. Station de base selon la revendication 9, **caractérisée en outre en ce que** ledit moyen d'optimisation comprend en outre un moyen pour filtrer chronologiquement des données dérivées de précédentes transmissions en liaison montante stockées dans la mémoire contextuelle physique (540, 610) lors du calcul d'un meilleur faisceau pour la transmission en liaison descendante.

11. Station de base selon la revendication 9, **caractérisée en outre en ce que** ledit moyen d'optimisation comprend en outre un moyen pour filtrer chronologiquement des données dérivées de précédentes transmissions en liaison montante stockées dans la mémoire contextuelle physique (540, 610) lors de la formation d'un faisceau pour la transmission en liaison descendante.

12. Station de base selon l'une quelconque des revendications 9 à 11, **caractérisée par le fait que** lesdites données dérivées des paquets de données reçus en liaison montante comprennent en outre des valeurs souples et par un moyen pour décoder des transmissions en liaison montante par une redondance incrémentielle.

13. Station de base selon l'une quelconque des revendications 9 à 12, **caractérisée par** un moyen pour multiplexer des stations mobiles couvertes par le même faisceau d'antenne ou un faisceau d'antenne voisin d'une antenne adaptative sur le même canal de données en paquets.
